(19) Europäisches Patentamt
European Patent Office
Office européen des brevets

(11) Numéro de publication: **0 266 279 B1**

# (12) FASCICULE DE BREVET EUROPEEN

(45) Date de publication de fascicule du brevet: **02.05.91**

(51) Int. Cl.[5]: **G11B 7/24**

(21) Numéro de dépôt: **87420255.9**

(22) Date de dépôt: **24.09.87**

## (54) Substrat polymère rigide pour disque optique et les disques optiques obtenus à partir dudit substrat.

(30) Priorité: **29.09.86 FR 8613715**

(43) Date de publication de la demande: **04.05.88 Bulletin 88/18**

(45) Mention de la délivrance du brevet: **02.05.91 Bulletin 91/18**

(84) Etats contractants désignés: **AT BE CH DE ES FR GB GR IT LI LU NL SE**

(56) Documents cités:
**EP-A- 0 155 452**
**EP-A- 0 178 836**
**EP-A- 0 191 705**

**PATENT ABSTRACTS OF JAPAN, vol. 6, no. 255 (P-162)[1133], 14 décembre 1982; & JP-A-57 152 550 (FUJITSU K.K.) 20-09-1982**

**PATENT ABSTRACTS OF JAPAN, vol. 8, no. 16 (M-270)[1453], 24 janvier 1984; & JP-A-58 177 396 (TOKYO DENKI KAGAKU KOGYO K.K.) 18-10-1983**

(73) Titulaire: **RHONE-POULENC CHIMIE
25, quai Paul Doumer
F-92408 Courbevoie Cédex(FR)**

(72) Inventeur: **Bonnebat, Claude
5, rue Alfred-de-Musset
F-77340 Pontault-Combault(FR)**
Inventeur: **Morin, Alain
21, rue Francis-Chirat
F-69100 Villeurbanne(FR)**
Inventeur: **Quentin, Jean-Pierre
35, rue Joliot-Curie
F-69005 Lyon(FR)**

(74) Mandataire: **Trolliet, Maurice et al
RHONE-POULENC INTERSERVICES Service Brevets Chimie Centre de Recherches des Carrières B.P. 62
F-69192 Saint-Fons Cédex(FR)**

EP 0 266 279 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un substrat polymère rigide et gravé, moulé par injection, pour disques à enregistrement ou à lecture optique, à base de polymère thermotrope. Elle concerne également les disques optiques faits à partir dudit substrat.

On connaît déjà des substrats pour disques optiques, mais ces substrats ou ne sont pas en matériau thermotrope (EP-A-O.155.452), ou sont en matériau thermotrope (EP-A-0178.836), mais dans ce cas ils n'ont pas les caractéristiques de préparation et mécaniques des substrats selon la présente invention.

On entend par disque optique, tous les types de supports d'enregistrement à lecture par faisceau laser qui peuvent avoir été enregistrés :

- soit lors de leur fabrication, par une phase de moulage ou de pressage permettant de réaliser un micro-relief sur la surface du substrat du disque (disques du type compact-disque ou vidéo-disque),
- soit par une inscription thermique non reversible, réalisée également sous faisceau laser et caractérisée généralement par une altération de la couche sensible d'enregistrement sous forme de trous ou de bulles ou autres microdégradations locales,
- soit de façon thermique ou thermo-magnétique reversible, sans formation d'une altération physique irréversible de la couche sensible, en induisant un changement d'état ou du sens d'aimantation de la couche qui, par sa reversibilité, offre la possibilité d'un effacement ou d'une ré-écuriture.

Pour réaliser un disque optique, on associe en général, de manière connue en soi, trois types de matériaux (cf. les figures 1 et 2 dans le dessin ci-joint qui représente chacune, sans échelle déterminée, une vue en coupe fragmentaire d'un disque optique par un plan contenant l'axe du disque) :

- un substrat (1) qui est le plus souvent un matériau transparent et joue de ce fait le rôle de couche d'entrée pour le rayon lumineux. L'épaisseur de cette couche d'entrée se situe généralement entre 1 mm et 2 mm. Pour permettre de définir la piste d'enregistement et son suivi par le faisceau laser, on matérialise sur tout ou partie de la face opposée à la face d'entrée de ce substrat (1) des sillons (ou reliefs) (2) de forme concentrique ou disposés en spirale à l'intérieur desquels ou entre lesquels sont disposées les informations nécessaires à la synchronisation, à l'identification des données ou à l'asservissement du suivi de piste. Il est très avantageux de réaliser les micro-reliefs (2) directement au moment du moulage du substrat (1), mais ceci n'est possible qu'avec des matériaux moulables par injection. Dans le cas d'un matériau comme le verre, ce micro-relief doit être rapporté par une étape de photopolymérisation d'un vernis déposé en couche très mince. Cette opération doit être effectuée dans des conditions de très haute propreté pour éviter les défauts de contamination par des poussières et elle peut être la source de défauts allant jusqu'au rejet du disque à cause de la formation de microbulles ou d'arrachements du micro-relief lors du moulage et du démoulage à l'aide d'une matrice. Pour ces raisons, il est préférable de pouvoir utiliser comme substrat (1) un matériau polymère et de réaliser directement le micro-relief (2) au moment du moulage par injection ;
- une couche sensible réfléchissante (3) fixée sur ledit substrat prégravé, (dans le cas où le disque contient déjà toutes les informations, cette couche ne joue évidemment que le rôle de réflecteur) ;
- et une couche arrière de protection (4), transparente ou opaque qui peut être limitée à un simple vernis de protection. Dans le cas d'un disque à double face d'entrée, cette couche arrière peut être constituée par une structure identique à celle de la couche d'entrée (1).

L'assemblage de la couche d'entrée (1) et de la couche arrière (4) est réalisé par un moyen de raccordement (5) qui peut consister par exemple en des joints coaxiaux élastiques (6) assurant éventuellement une parfaite étanchéité, ( le disque présente alors une structure dite de type sandwich à joint d'air (7) ) ou en un matériau liant transparent (8) (le disque présente alors une st ructure dite de type laminée).

Dans le cas d'un disque à simple face d'entrée, tel que celui décrit dans dans les figures 1 et 2, il est assez avantageux d'utiliser le même type de matériau transparent pour confectionner à la fois la couche d'entrée (1) et la couche de protection (4).

Selon une variante connue ( cf. la figure 3 dans le dessin ci-joint), la couche sensible réfléchissante (3) peut également être disposée sur la face de la couche arrière (4) qui est en regard de la couche d'entrée (1) ; dans ce cas, la couche arrière (4) joue alors le rôle de substrat tandis que la couche d'entrée (1) ne joue qu'un rôle de séparation optique. Une pareille structure permet d'utiliser au besoin, comme substrat (4), un matériau non transparent. Le brevet américain n ° 4 074 282 décrit un disque présentant ce type de structure dans laquelle on a renforcé l'épaisseur du substrat (4) et réduit celle de couche d'entrée (1) pour pouvoir utiliser des matériaux de faible rigidité pour la réalisation du substrat .

Contrairement au cas des constructions des figures 1 et 2, dans le cas de la construction du type de celle de la figure 3, le substrat (4) sur lequel sont déposées la microgravure (2) et la couche sensible (3) ne joue plus le rôle de couche d'entrée, mais au contraire joue celui de couche arrière. Dans ce cas, le

matériau de la couche d'entrée (1) doit être parfaitement plan et transparent.

Toutefois les constructions du type de celle de la figure 3 n'ont pas d'intérêt particulier si le matériau utilisé comme substrat (4) n'offre pas des propriétés exceptionnelles de rigidité ou de stabilité tout en conservant l'aptitude au moulage par injection.

En effet dans le cas d'un substrat verre, on préfère généralement les constructions du type de celle de la figure 1 ou 2 en réutilisant, le cas échéant, un substrat défectueux pour la couche arrière (4). Toutefois les substrats verre sont particulièrement onéreux à fabriquer et obligent à une opération supplémentaire de photopolymérisation qui affecte par ailleurs le rendement de la fabrication. On recherche donc à substituer au verre des substrats plastiques moulés par injection.

On a cherché jusqu'ici à utiliser, pour la fabrication des substrats plastiques, des matériaux transparents de manière à réaliser des constructions du type de celle de la figure 1 ou 2 dans lesquelles le substrat sert également de couche d'entrée.

Le fait de rechercher pour un substrat polymère d'excellentes caractéristiques optiques (transparence élevée, abscence de biréfringence, homogénéité) limite en pratique le choix des matériaux polymères à des produits de structure amorphe, car on sait que les polymères semi cristallins, qui bénéficient par ailleurs de propriétés mécaniques et thermiques supérieures, sont des produits opaques ou fortement diffusants. Il a été reconnu par exemple que le polyméthacrylate de méthyle et même le polycarbonate sont des matériaux aux possibilités trop limitées, en matière de rigidité et de propriétés optiques, pour être utilisés dans des disques optiques mettant en jeu des couches d'enregistrement sensibles à l'humidité ou à l'oxydation.

Le matériau polymère injectable susceptible d'être utilisé comme substrat doit réunir des propriétés très différentes telles que :

- une excellente aptitude au moulage (matériau fluide) pour permettre le remplissage des microcavités du moule et un démoulage sans retrait,
- une aptitude à l'obtention de pièces planes non déformées (absence de contraintes internes suceptibles de créer un phénomène de voile),
- une haute rigidité nécessaire à la stabilité du disque assemblé, en particulier pour éviter la déformation de la couche sensible sous l'influence de variations de pression extérieure,
- une haute stabilité dimensionnelle (tenue à la température, insensibilité à l'humidité, faible coefficient d'expansion thermique).

Jusqu'ici les substrats plastiques t ransparents n'ont été utilisés avec succès que pour des disques de petit format et lorsque la couche d'enregistrement est peu sensible à l'oxydation ou à l'humidité. Des travaux récents ont montré la nécessité de rechercher cependant d'autres types de matériaux notamment (polyoléfines modifiées, polycarbonate modifié), mais il s'agit d'une voie d'amélioration extrêmement limitée dans la mesure où certaines propriétés souhaitées (par exemple haute rigidité et transparence) ne peuvent pas être obtenues simultanément.

On sait corriger les valeurs naturelles des matériaux polymères en matière de rigidité (quand elle est trop faible ; on a par exemple un module d'élasticité trop bas) et de stabilité dimensionnelle (quand elle est là aussi trop faible ; on a par exemple un coefficient d'expansion thermique trop élevé) par addition de charges. Mais pour mouler des substrats rigides en matière plastique pour disques optiques on doit éviter d'utiliser des charges dont la présence pourra jouer un rôle néfaste sur les propriétés d'état de surface et sur la stabilité dimensionnelle. En outre, les polymères chargés présentent une viscosité trop élevée à l'état fondu pour permettre un moulage de précision avec un bon rendu d'empreinte correspondant au micro-relief dont on a parlé ci-avant.

Dans la présente invention, on met en oeuvre un matériau polymère connu dont l'intérêt n'a pas été étudié jusqu'ici pour la confection de substrats pour disques optiques, ledit matériau polymère ayant des caractérisques intrinsèques particulières qui se combinent avantageusement et de manière inattendue avec l'influence des conditions de transformation pour aboutir aux propriétés principales suivantes :

- une rigidité très élevée résultant d'un autorenforcement du substrat au cours du moulage par injection,
- une stabilité dimensionnelle très élevée marquée par une très faible valeur du coefficient d'expansion thermique dans le sens radial,
- une absence de retrait au démoulage,
- une reprise d'eau extrêmement réduite.

Plus précisément, la présente invention dans son premier objet concerne un substrat en matière polymère, rigide, circulaire et gravé sur tout ou partie d'au moins une des ses faces, pour disque à enregistrement ou à lecture optique, caractérisé en ce que d'une part ledit polymère appartient à la famille des polymères thermotropes et que d'autre part ledit substrat est soumis pendant sa préparation, à une

orientation moléculaire très élevée, ladite préparation consistant à procéder à une opération de moulage du polymère thermotrope par injection dans un moule approprié équipé d'un système d'injection centrale de la matière polymère fondue.

Dans les conditions de la transformation , il se développe une orientation naturelle qui, du fait d'une alimentation au centre de la pièce, se développe de façon favorable et isotrope dans le plan dans le cas d'une géométrie à symétrie circulaire pour créer une structure présentant les propriétés attendues.

Les substrats circulaires moulés obtenus possèdent généralement les dimensions principales suivantes : diamètre extérieur : compris entre 60 mm et 360 mm ; épaisseur : comprise entre 0,5 mm et 4 mm. Typiquement, les substrats qui sont les plus intéressants en raison des normalisations existantes possèdent les dimensions suivantes : diamètres extérieurs 90 mm (3 pouces 1/2), 130 mm (5 pouces 1/4), 200 mm (8 pouces), 305 mm (12 pouces), 355 mm (14 pouces) permettant de conduire à des disques de capacité variant de 50 mégaoctets à 2 gigaoctets ; épaisseur : comprise entre 0,8 mm et 1,5 mm.

Les substrats circulaires moulés obtenus possèdent sur tout ou partie d'au moins une de leurs faces (celle(s) destinée(s) à supporter une couche sensible d'enregistrement) une microgravure faite au moment de l'opération de moulage par injection, consistant habituellement en un sillon ayant la forme d'une spirale ou de pistes concentriques, présentant un pas compris entre 1 et 2 $\mu$m, une profondeur comprise entre 400 et 15000 angströms c'est-à-dire entre 400 x $10^{-10}$ et 15000 x $10^{-10}$ mètres et une largeur comprise entre 0,4 et 1 $\mu$m.

Des polymères thermotropes qui conviennent pour la mise en oeuvre de la présente invention comprennent les polyesters totalement aromatiques, les polyesters alkylaromatiques, les poly(ester-amides) totalement aromatiques, mes poly(ester-amides) alkylaromatiques, les polyazométhines aromatiques, les polyesters carbonates aromatiques et les mélanges de ces polymères.

Selon une modalité préférentiellee de mise en oeuvre de la présente invention, les polymères thermotropes auxquels on fait appel sont les polyesters totalement aromatiques, les polyesters alkylaromatiques, les polyesters carbonates aromatiques et les mélanges de ces polymères.

Des polyesters totalement aromatiques qui sont thermotropes, c'est-à-dire qui sont capables de former des masses fondues anisotropes sont décrits par exemple : dans les brevets américains n$^0$ 3.991.013, 3.991.014, 4.066.620, 4.075.262, 4.118.372, 4.130.545, 4.181.792, 4.188.476, 4.219.461, 4.224.433, 4.230.817, 4.346.208 ; et dans la demande de brevet européen n$^0$ 86420013.4 publiée sous le n$^0$ 0191.705.

Des polyesters alkylaromatiques qui sont thermotropes sont décrits par exemple dans les brevets américains n$^0$ 3.778.410, 3.804.805, 4.248.995, 4.311.824 et 4.355.133.

Des polyesters carbonates qui sont thermotropes sont décrits par exemple dans les brevets américains n$^0$ 4.107.143, 4.284.757 et 4.371.660.

Les polymères thermotropes qui sont choisis pour la mise en oeuvre de la présente invention sont ceux, appartenant aux familles générales ou préférées précitées, qui possèdent une température d'écoulement se situant dans l'intervalle allant de 200$^\circ$ C à 350$^\circ$ C et qui présentent une viscosité inhérente au moins égale à 1 $dlg^{-1}$ et se situant plus précisément dans l'intervalle allant de 1,1 à 4,0 $dlg^{-1}$. On entend par "température d'écoulement", la température à laquelle les bores d'un échantillon sous forme de copeau de polymère ou de fibre coupée commencent à s'arrondir ; cette température est déterminée par observation visuelle de l'échantillon sur une lamelle couvre-objet pour une vitesse de montée en température appropriée généralement de l'ordre de 10$^\circ$ C à 20$^\circ$ C par minute, observation faite à l'aide d'un microscope équipé d'une platine chauffante connu dans le commerce sous la marque THERMOPAN. A propos de la viscosité inhérente, on précisera qu'elle est mesurée à 25$^\circ$ C sur une solution renfermant 0,5 g de polymère pour 100 $cm^3$ d'un mélange solvant parachlorophénol dichloro-1,2 éthane (50/50 en volume).

Des polyesters totalement aromatiques thermotropes qui sont tout spécialement préférés pour la mise en oeuvre de la présente invention pour ceux décrits dans la demande de brevet européen n ° 86420013.4 publiée sous le n ° 0191.705. Ces polyesters présentent les particularités suivantes :

- ils comprennant des unités de récurrence de formules (I), éventuellement (II), (III) et (IV) :

  (I) désignant la structure :

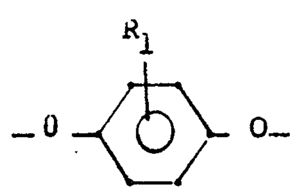

dans laquelle

$R_1$ représente un radical méthyle ou éthyle ou un atome de chlore ou de brome, les unités (I) pouvant être identiques ou différentes entre elles,
(II) désignant la structure :

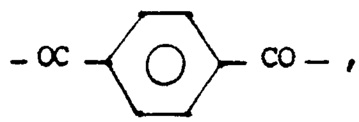

(III) désignant la structure :

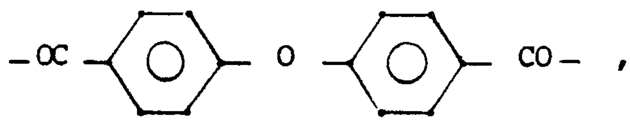

(IV) désignant la structure :

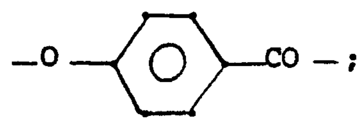

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;
- la quantité des unités (IV), exprimée par rapport à la quantité des unités ( I), se situe dans l'intervalle allant de 10 à 300 % en mole.

Ces polyesters totalement aromatiques spécialement préférés englobent aussi les polymères qui peuvent contenir en outre dans leur structure des unités aromatiques génératrices de fonctions esters (unités dioxy et/ou unités dicarbonyle et/ou unités mixtes oxy/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

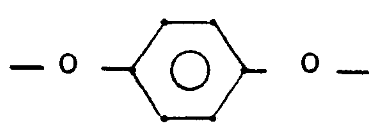 (I')

et/ou 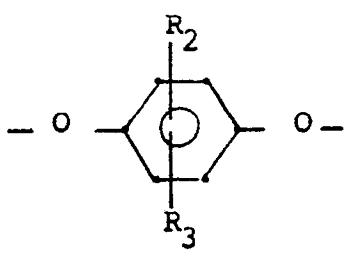 (I") où $R_2$

et $R_3$, qui peuvent être identiques ou différents, ont chacun la définition donnée ci-avant pour $R_1$, les unités (I") pouvant être identiques ou différentes entre elles,

et/ou 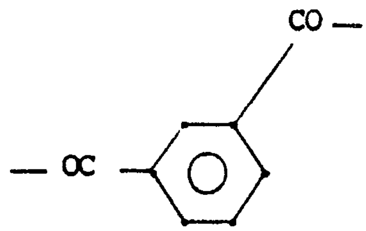 (II')

et/ou 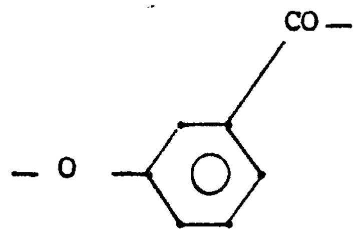 (IV')

Des polyesters alkylaromatiques thermotropes qui sont tout spécialement préférés sont ceux décrits dans les brevets américains n ° 4.248.995 et 4.311.824. Ces polyesters sont constitués d'unités de formule :

(V) $(-O-X_1-O-)_a\ (-O-X_2-O-)_b\ (-O-X_3-O-)_c$

(VI) $-CO-Y-CO-$

(VII) $-CO-Z-CO-$

dans laquelle :

. $X_1$ représente un radical phénylène-1,4 monosubstitué par un groupe méthyle, éthyle ou un atome de chlore ou brome,

. $X_2$ un radical phénylène-1,4 non substitué,

. $X_3$ représente un radical phénylène-1,4 disubstitué par deux groupes méthyle, éthyle ou 2 atomes de chlore ou brome, ou un radical diphénylène-4,4′ ou p-p′-diphénylène éther dans lequel chaque noyau aromatique peut être substitué par un groupe méthyle, éthyle ou un atome de chlore ou brome,

avec $0{,}4 \leqq a \leqq 1$

$0 \leqq b \leqq 0{,}6$

$0 \leqq c \leqq 0{,}1$

et $a + b + c = 1$,

. Y représente :

- un radical phénylène-1,4, cyclohexylène-1,4
- ou un radical comportant deux groupes phénylène pouvant être reliés entre eux par une liaison simple ou une chaîne acyclique pouvant comporter jusqu'à 8 atomes de carbone, et éventuellement 1 ou 2 hétéroatomes
- ou un radical aromatique divalent comportant au moins deux noyaux phényles condensés dans lequel les liaisons rattachées aux groupes carbonyles sont opposées et parallèles, et

. Z représente un radical $-(CH_2)_{\bar{n}}$ avec $3 \leqq n \leqq 10$

. le rapport molaire Z/Y + Z étant compris entre 20 et 50 %.

Des polyesters carbonates thermotropes qui sont tout spécialement préférés sont ceux décrits dans le brevet américain n °4.284.757. Ces polyesters sont constitués d'unités de formule :

(VIII) $(-O-R_4-O-)_{a'}$ , $(-O-R_5-O-)_{b'}$

(IX) $\overset{\displaystyle O}{\overset{\|}{-C-}}$

(X) $-CO-R_6-CO-$

dans lesquelles :

. les radicaux $R_4$, identiques, représentent chacun un radical phénylène-1,4 monosubstitué par un groupe méthyle, éthyle, ou un atome de chlore ou de brome ;
. les radicaux $R_5$ représentent chacun un radical phénylène-1,4 non substitué ;
. avec $0,3 \leq a' \leq 1$ ; $O \leq b' \leq 0,7$ ; et $a' + b' = 1$ ;
. les radicaux $R_6$, qui peuvent être identiques ou différents, représentent chacun un radical choisi parmi les groupes phénylène-1,4, cyclohexylène-1,4, biphénylène-4,4', naphtylène-2,6, éthylènedioxy-4,4' diphénylène-1,1',butylènedioxy -4,4' diphénylène-1,1', hexylènedioxy-4,4' diphénylène-1,1' ; la quantité des unités (IX) dans le mélange (IX) et (X) étant comprise entre 30 et 90 % en mole ; et le rapport molaire des unités (VIII) par rapport à la somme des unités (IX) + (X) étant compris entre 0,95 et 1,05.

Les substrats pour disques optiques conformes à la présente invention sont réalisés au moyen d'un procédé de moulage par injection en opérant dans la plage d'anisotropie du po que la thermotropie est facile à mettre en évidence lorsqu'on observe le polymère à l'état fondu dans un système optique équipé de deux polariseurs croisés (90° C) : il se produit pour les échantillons anisotropes une biréfringence et une transmission de la lumière polarisée à travers les polariseurs croisés. La mise en évidence de l'anisotropie des polyesters selon la présente invention a été effectuée par la méthode thermo-optique TOT décrite dans le brevet français 2 270 282. On entend par "plage d'anisotropie", l'intervalle de température qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de décomposition du polymère. En général, les masses fondues anisotropes qui sont injectées dans le cadre de la présente invention possèdent une plage d'anisotropie étalée sur au moins 30° C.

Plus précisément, les substrats conformes à la présente invention sont réalisés en injectant, à l'aide d'un matériel connu en soi, la masse fondue anisotrope dans un moule circulaire dont les caractéristiques géométriques sont adaptées à la structure et aux dimensions souhaitées pour les substrats désirés et qui est équipé d'un système permettant une injection centrale de la matière polymère. Les conditions de mise en oeuvre permettant d'obtenir des substrats conformes à la présente sont les suivantes : température des parois du moule : 100° C à 200° C ; température du polymère fondu : 280° C à 350° C; durée d'injection : 2 à 10 secondes ; pression d'injection : 80 MPa à 160 MPs ; pression de maintien : 40 MPa à 120 MPa.

Les substrats circulaires moulés obtenus possèdent une basse densité inférieure à 1,8 et présentent les propriétés attendues. Plus précisément, ils possèdent un module d'élasticité dans le sens radial éléve allant de 9 000 MPa à 18 000 MPa et un coefficient d'expansion thermique dans le sens radial qui est inférieur à 30 µm/m/° C et se situe plus précisément entre 10 et 20 µm/m/° C. L'intérêt des substrats moulés obtenus ne se limite pas à ces deux propriétés : on fera noter notamment que ces matériaux présentent de plus une TFSC élevée, au moins égale à 150° C, qui peut atteindre 240° C et même davantage et une bonne stabilité dimensionnelle avec de faibles valeurs de retrait au démoulage et que, s'agissant des propriétés physico-chimiques, ils sont par nature insensibles aux solvents et très peu sensibles à l'humidité. Par ailleurs, les masses fondues anisotropes utilisées dans les opérations de moulage par injection ont une très grande fluidité à chaud ce qui permet d'obtenir des articles présentant un excellent profil de surface et notamment une gravure très précisément reproduite.

Après l'opération de moulage, les substrats obtenus peuvent subir avant ou après démoulage un traitement thermique à température élevée, mais inférieure à la température de fusion du polymère. Après démoulage et refroidissement, les substrats obtenus sont soumis au traitement classique visant à faire (ou à parfaire la finition de) l'évidement central, puis ils sont associés, et il s'agit là du second objet de la présente invention, aux autres matériaux qui sont nécessaires à la confection des disques optiques.

Les substrats conformes à la présente invention ne sont pas transparents, ce qui interdit de leur faire jouer le double rôle de support de la couche d'enregistrement optique et de couche d'entrée au travers de laquelle passe le faisceau laser et, pour la réalisation de disques optiques, ils doivent être associés à un matériau transparent constituant la couche d'entrée selon une structure identique ou équivalente à la réalisation décrite ci-avant dans le cas de la figure 3.

Plus précisément, la présente invention, dans son second objet, concerne des disques pour le stockage d'informations destinées à être lues par faiscea u laser qui comportent :

- au moins une couche d'entrée transparente,
- un substrat en matière polymère rigide comportant sur au moins une partie de la face en regard de la couche d'entrée une micro-gravure rapportée au moment de l'opération de moulage par injection du substrat, ce substrat ainsi prégravé étant revêtu de plus par une couche sensible d'enregistrement réléchissante,

- la couche d'entrée et le substrat étant reliés par un moyen de raccordement tel que la couche sensible réfléchissante soit isolée de manière étanche ou non de l'envrionnement extérieur,
  lesdits disques optiques étant caractérisés en ce que le substrat est à base de polymère appartenant à la famille des polymères thermotropes et est soumis pendant sa préparation à une orientation moléculaire très élevée, ladite préparation consistant à procéder à une opération de moulage du polymère thermotrope par injection dans un moule approprié équipé d'un système d'injection centrale de la matière polymère.

Dans le cas d'un disque optique à simple couche d'entrée, qui est illustré schématiquement à titre d'exemple et sans échelle déterminée dans les figures 3 et 4 ci-jointes, une construction intéressante consiste à associer au substrat (4) en polymère thermotrope qui supporte la couche sensible réfléchissante (3), une couche d'entrée (1) consistant en un plateau circulaire en verre ou en matière plastique transparente conventionnelle. Les moyens de raccordement (5) du substrat (4) revêtu de la couche sensible (3) avec la couche d'entrée (1) sont différents selon que l'on veut réaliser une structure du type sandwich à joint d'air (ou air sandwich) ou une structure de type laminée.

La figure 3 illustre un disque optique de type air-sandwich selon l'invention dans lequel le moyen de raccordement (5) reliant la couche d'entrée (1) et le substrat (4) consiste en des joints coaxiaux élastiques (6) assurant éventuellement une parfaite étanchéité. La figure 4 illustre un mode de réalisation d'un disque optique à structure de type structure laminée selon l'invention dans lequel le moyen de raccordement (5) consiste en un matériau liant polymère transparent (8). Le choix de la méthode d'assemblage dépend généralement davantage des caractéristiques de la couche sensible (3) que du matériau servant à faire le substrat (4). Dans le cas d'un substrat thermotrope, la rigidité élevée de ce matériau se prête cependant bien à la réalisation de constructions du type air-sandwich étanche, qui doivent résister aux variations de la pression extérieure sans subir de déformation, en particulier dans le cas des disques de grand diamètre.

L'utilisation d'une couche d'entrée (1) en verre et d'un substrat (4) en polymère thermotrope est tout particulièrement intéressante lorsque l'on souhaite fabriquer des disques de grand diamètre supérieur à 200 mm (8 pouces) qui sont de plus étanches, car dans ces cas la construction d'ensemble présente une rigidité très élevée qui est indispensable au maintien de l'étanchéité. Dans ce type de construction, la couche d'entrée (1) en verre n'ayant pas à recevoir une prégravure et n'étant pas utilisée pour le dépot de la couche d'enregistrement, son rendement d'utilisation est très élevé et son coût de mis en oeuvre est minimisé contrairement à ce qui se passe quand ce matériau joue à la fois le rôle de face d'entrée et de substrat.

Pour des disques optiques de petit diamètre compris par exemple entre 130 mm (5 pouces 1/4) et 200 mm (8 pouces) l'utilisation d'une couche d'entrée (1) en matière plastique transparente conventionnelle moulée ou coulée est possible sans dégrader les caractéristiques globales de rigidité apportées par le substrat en polymère thermotrope.

Pour réaliser un disque optique à deux couches d'entrée on peut procéder à l'association dos à dos de deux disques à une seule couche d'entrée du type de ceux décrits dans les figures 3 et 4.

La présente invention, dans son second objet, concerne encore d es disques optiques à deux couches d'entrée qui sont situées de part et d'autre d'un seul et unique substrat en matière polymère rigide, chaque face dudit substrat en regard de chaque couche d'entrée portant sur au moins une partie de sa surface une micro-gravure rapportée au moment de l'opération de moulage par injection de substrat et, par dessus cette face prégravée, le dépôt d'une couche d'enregistrement réfléchissante, chaque couche d'entrée étant reliée au substrat par des moyens de raccordement tels que les deux couches d'enregistrement réfléchissantes soient isolées de manière étanche ou non de l'environnement extérieur, lesdits disques optiques étant caractérisés en ce que le substrat est à base de polymère appartenant à la famille des polymères thermotropes et est soumis pendant sa préparation à une orientation moléculaire très élevée, ladite préparation consistant à procéder à une opération de moulage du polymère thermotrope par injection dans un moule approprié équipé d'un système d'injection centrale de la matière polymère.

La figure 5 ci-jointe illustre schématiquement à titre d'exemple et sans échelle déterminée le mode de réalisation d'un disque optique à double face d'entrée (1) en utilisant le même substrat (4) en polymère thermotrope. Dans cet exemple de construction, les moyens de raccordement (5) reliant les couches d'entrée (1) et le substrat (4), comportant sur ses deux faces les sillons prégravés (2) et les couches d'enregistrement (3), consistant en des joints coaxiaux élastiques (6).

La technologie décrite précédemment se prête à la réalisation de n'importe lequel des différents types de disques optiques :

- disques non inscriptibles, du type ROM ; dans ce cas, le substrat en polymère thermotrope contient en outre dans sa prégravure les micro-reliefs supplémentaires nécessaires au stockage de l'information et ne doit subir qu'une étape de métallisation pour obtenir le contraste voulu entre les zones

planes et les micro-reliefs ,

- disques inscriptibles, du type WORM ; du fait de sa tenue thermique élevée et de sa bonne résistance aux solvants, le substrat en polymère thermotrope se prête aussi bien au dépot de couches métalliques (tellure, métaux nobles) qu'à celui de colorants ou de sous-couches de polymères en solution déposées par enduction,
- disques réinscriptibles, de type magnéto optique ou autre.

Les méthodes de dépôt de la couche sensible d'enregistrement qui sont utilisées dans le cas des substrats verre selon des technologies bien connues (enduction, évaporation sous vide) sont également applicables dans le cas des substrats en polymère thermotrope du fait de leur bonne résistance à la température et aux solvants.

Les exemples pratiques qui suivent sont donnés à titre indicatif mais non limitatif, pour illustrer davantage l'invention.

EXEMPLE 1

Exemple de préparation d'un substrat rigide, circulaire conforme à la présente invention gravé sur l'une de ses faces.

1. Description du polymère thermotrope utilisé

On prépare un polyester totalement aromatique du type de celui décrit dans la demande de brevet européen n ° 86420013.4 publiée sous le n ° 0191.705.

Dans un réacteur de polycondensation de 7,5 litres agité et chauffé par un fluide caloporteur circulant dans la double enveloppe du réacteur, muni d'un dispositif de distillation et de balayage par un gaz inerte, on introduit les réactifs et catalyseurs suivants :

(1) - diacétate de chlorohydroquinone : 1028 g
[rapport molaire (1)/(2) + (3) = 1]

(2) - acide téréphtalique : 373 g
[50% en mole dans mélange (2) + (3)]

(3) - dicarboxy-4,4' diphényléther : 581 g
[50% en mole dans mélange (2) + (3)

(4) - acide para-acétoxybenzoïque : 275,5 g
[34% en mole par rapport à (1)]

(5) - acétate de magnésium : 1,13 g
[500 ppm]

Le réacteur est purgé à l'azote, puis chauffé par le fluide caloporteur réglé à 260° C pendant 2 heures et 20 minutes. Le volume d'acide acétique distillé est de 506 $cm^3$ (soit 83% de la théorie). On élève ensuite progressivement la température du bain métallique jusqu'à 330° C en 40 minutes, en diminuant dans le même temps la pression de $1010.10^2$ Pa à $0{,}39.10^2$ Pa. Après que la distillation d'acide acétique se soit arrêtée, on maintient encore la température de 330° C et la pression de $0{,}39.10^2$ pendant 12 minutes 30 secondes. Le volume total d'acide acétique recueilli est de 602 $cm^3$ (soit 100% de la théorie).

Le polymère obtenu est grisâtre et d'aspect fibreux. Il possède une viscosité inhérente de 1,40 $dlg^{-1}$. La température d'écoulement est de 290° C. La plage d'anisotropie va de 290° C jusqu'à plus de 350° C.

2. Moulage du substrat par injection :

Le polymère est mis en oeuvre avec une presse à injecter BATTENFELD BSKM 100/70 S DS 2 000. Le

moule circulaire utilisé possède les caractéristiques suivantes : diamètre : 305 mm ± 0,10 mm; épaisseur : 1,5 mm ± 0,025 mm ; injection centrale avec une buse de diamètre : 4 mm . S'agissant des faces du moule, l'une est polie tandis que l'autre présente "en négatif" la gravure à reporter sur le substrat.

Les conditions de moulage sont les suivantes :

- température des faces du moule : 130° C,
- température du polymère fondu : 320° C,
- durée d'injection : 2,5 secondes,
- pression d'injection : 120 MPa,
- pression de maintien : 90 MPa.

3. Usinage du substrat :

Après démoulage et refroidissement, on procède dans le substrat au découpage d'un évidement central, coaxial, présentant un diamètre de 35 mm.

4. Propriétés du substrat moulé :

a) Etat de surface :

La face de support de la couche sensible comporte un sillon en forme de spirale ayant un pas de 1,7 μm, une profondeur de 700 angströms (700 x $10^{-10}$ mètres) et une largeur de 0,6 μm.

L'autre face du substrat est parfaitement lisse avec une rugosité superficielle de l'ordre de 0,02 μm.

b) Propriétés mécaniques :

La détermination des proprités mécaniques a été réalisée à partir d'éprouvettes prélevées radialement (dans la direction de l'écoulement) dans le substrat moulé obtenu :

. Propriétés en traction :

Les modules et la résistance sont mesurés à 23° C selon les indications de la norme NF T 51034 sur des éprouvettes de type haltère ayant une largeur de 4 mm et une épaisseur de 2 mm, conditionnées à EH 50 :

- module d'élasticité radial (Mr) : 13000 MPa,
- résistance à la rupture radiale : 100 MPa,
- allongement à la rupture : 3 %.

. Coefficient d'expansion thermique :

La stabilité dimensionnelle du substrat a été appréciée par des mesures de coefficient d'expansion thermique linéaire sur des échantillons parallélépipédiques de dimensions 5 x 5 x 2 mm (norme ASTM D 696-70 ; températures: -30° C à +30° C ; mesure sous azote sec) prélevés radialement (αr):

- αr : 15 μm/m/° C.

. TFSC :

La température de flexion sous charge est mesurée selon les indications de la norme NF-T 51005 : elle est égale à 250° C (sous 1,82 MPa).

c) Propriétés physico-chimiques:

. Densité : d = 1,45

. Cristallinité : la structure est semi-cristalline.

. Reprise d'eau : inférieure à 100 ppm. Pour effectuer cette mesure un échantillon (éprouvette AFNOR T 51034) est séché 3 heures à 150° C, pesé (poids $p_o$) et immergé dans l'eau, à température ambiante pendant 48 heures. Il est ensuite sorti de l'eau essuyé superficiellement et repesé (poids p) ; la reprise en eau est égale à $(p-p_o) / p_o X 10^6$.

EXEMPLE 2

Exemple de préparation d'un disque optique conforme à la présente invention. Il s'agit d'un disque optique inscriptible non effaçable de 305 mm (12 pouces) de diamètre extérieur ayant une structure du type de celle illustrée dans la figure 3 du dessin ci-joint.

1. Face d'entrée (1) :

Elle consiste en un disque circulaire en verre, parfaitement plat, ayant un diamètre extérieur de 305 mm et une épaisseur de 1,2 mm.

2. Substrat (4) :

Il s'agit du substrat prégravé en polymère thermotrope de 305 mm de diamètre extérieur et de 1,5 mm d'épaisseur obtenu à l'issue de l'exemple 1 précédent.

3. Couche d'enregistrement réfléchissante (3) :

La surface prégravée du substrat (4) est recouverte d'une sous-couche de nitrocellulose de 0,5 µm d'épaisseur déposée par centrifugation à la vitesse de 6 tours par seconde à parfir d'une solution à 8 g de nitrocellulose par litre de produit de marque AZ Thinner (mélange de solvants commercialisés par la Société Shipley). Après évaporation du substrat la sous-couche organique est recouverte d'une couche d'un alliage Cr(20) - Au(80) (pourcentage en poids) d'épaisseur voisine de 10 nm par évaporation sous vide.

4. Association face d'entrée (1) / substrat (4) recouvert par la couche d'enregistrement :

Elle est réalisée par un moyen de raccordement (5) consistant en des joints coaxiaux élastiques (6) à base de résine photopolymèrisable permettant de réaliser une construction de type air-sandwich totalement étanche.

5. Inscription du disque :

L'inscription de la couche d'enregistrement (3) est effectuée au travers de la face d'entrée (1) avec un faisceau provenant d'un laser semi-conducteur (λ = 820 nm) ayant une puissance de 9 mW, modulé à la fréquence de 2,5 MHz, le disque étant entrainé à la vitesse constante de 900 tours/minute. On a obtenu une succession d'enpreintes d'une largeur de 0,6 µm et d'une longueur de 0,6 à 2,5 µm, sous la forme de micro-reliefs résultant de la déformation de la couche sensible métallique par suite de l'échauffement et de la décomposition de la sous-couche de nitrocellulose.

6. Lecture du disque :

Sur une telle couche d'enregistrement enregistrée, la lecture des informations se fait avec une puissance de laser de 1 mW avec un rapport signal/bruit de 50 décibels. La stabilité du substrat et de la couche d'enregistrement est telle que le disque peut être stocké à 45° C sous 80 % d'humidité relative pendant 30 jours sans qu'il apparaisse une diminution sensible de l'amplitude du signal.

## Revendications

1. Substrat en matière polymère thermotrope, rigide, circulaire et gravé sur tout ou partie d'au moins une de ses faces, pour disque à enregistrement ou à lecture optique, caractérisé en ce qu'il possède un coefficient d'expansion thermique dans le sens radial compris entre 10 et 30 µm/m/° C, un module d'élasticité en traction dans le sens radial allant de 9000 MPa à 18000 MPa, et en ce qu'il est obtenu

en opérant par moulage du polymère thermotrope par injection dans un moule approprié équipé d'un système d'injection centrale du polymère fondu.

2. Substrat selon la revendication 1, caractérisé en ce qu'il possède les dimensions principales suivantes : diamètre extérieur compris entre 60 mm et 360 mm et épaisseur comprise entre 0,5 mm et 4 mm et qu'il comporte, sur tout ou partie d'au moins une de ses faces, une gravure faite au moment de l'opération de moulage par injection consistant en un sillon ayant la forme d'une spirale ou de pistes concentriques, présentant un pas compris entre 1 et 2 $\mu$m, une profondeur comprise entre 400 x $10^{-10}$ et 15000 x $10^{-10}$ mètres et une largeur comprise entre 0,4 et 1 $\mu$m.

3. Substrat selon la revendication 1 ou 2, caractérisé en ce qu'il possède une densité inférieure à 1,8 et une température de flexion sous charge au moins égale à 150° C.

4. Substrat selon l'une quelconque des revendications précédentes, caractérisé en ce que les polymères thermotropes utilisés possèdent une température d'écoulement se situant dans l'intervalle allant de 200° C à 350° C.

5. Susbstrat selon l'une quelconque des revendications précédentes, caractérisé en ce que les polymères thermotropes utilisés ont une viscosité inhérente comprise entre 1 et 4 dl/g.

6. Substrat selon l'une quelconque des revendications 1 à 5, caractérisé en ce qu'il est moulé par injection dans les conditions suivantes : température des parois du moule :100° C à 200° C ; température du polymère fondu : 280° C à 350° C ; durée d'injection : 2 à 10 secondes ; pression de maintien : 40 MPa à 120 MPa.

7. Substrat selon l'une quelconque des revendications précédentes, caractérisé en ce que le polymère thermotrope est choisi parmi :
- a) les polyesters thermotropes comprenant essentiellement les unités de récurrence de formule I, III, IV et éventuellement II,
(I) désignant la structure :

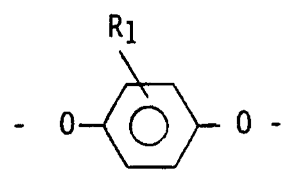

dans laquelle
$R_1$ représente un radical méthyle ou éthyle ou un atome de chlore ou de brome, les unités (I) pouvant être identiques ou différentes entre elles,
(II) désignant la structure :

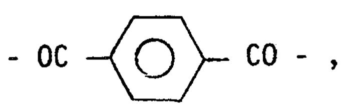

(III) désignant la structure :

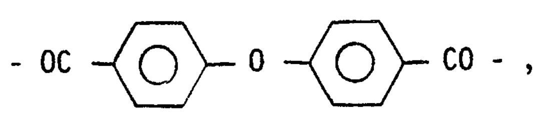

(IV) désignant la structure :

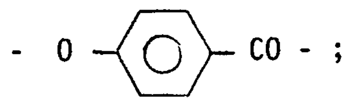

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70% en mole et celle des unités (III), par rapport à la même référence, se situe dans l'intervalle allant de 100 à 30% en mole ;
- la quantité des unités (IV), exprimée par rapport à la quantité des unités (I), se situe dans l'intervalle allant de 10 à 300% en mole ;
- b) les polyesters alkylaromatiques thermotropes comprenant essentiellement des unités de formule :

$$(V)\quad (-O-X_1-O-)_a\ (-O-X_2-O-)_b\ (-O-X_3-O-)_c$$
$$(VI)\quad -CO-Y-CO-$$
$$(VII)\quad -CO-Z-CO-$$

dans laquelle :

. $X_1$ représente un radical phénylène-1,4 monosubstitué par un groupe méthyle, éthyle ou un atome de chlore ou brome,

. $X_2$ un radical phénylène-1,4 non substitué,

. $X_3$ représente un radical phénylène-1,4 disubstitué par deux groupes méthyle, éthyle ou 2 atomes de chlore ou brome, ou un radical diphénylène-4,4' ou p-p'-diphénylène éther dans lequel chaque noyau aromatique peut être substitué par un groupe méthyle, éthyle ou un atome de chlore ou brome,

avec $0,4 \leqq a \leqq 1$
$0 \leqq b \leqq 0,6$
$0 \leqq c \leqq 0,1$
et $a + b + c = 1$ ,

. Y représente :
  - un radical phénylène-1,4, cyclohexylène-1-4
  - ou un radical comportant deux groupes phénylène pouvant être reliés entre eux par une liaison simple ou une chaîne acyclique pouvant comporter jusqu'à 8 atomes de carbone, et éventuellement 1 ou 2 hétéroatomes
  - ou un radical aromatique divalent comportant au moins deux noyaux phényles condensés dans lequel les liaisons rattachées aux groupes carbonyles sont opposées et parallèles, et

. Z représente un radical $(CH_2)_n$ avec $3 \leqq n \leqq 10$

. le rapport molaire Z/Y + Z étant compris entre 20 et 50%.

- c) les polyesters carbonates thermotropes comprenant essentiellement des motifs de formule :

$$(VIII)\quad (-O-R_4-O-)_{a'} \quad , \quad (-O-R_5-O-)_{b'}$$

$$(IX)\quad -\overset{O}{\overset{\|}{C}}-$$

$$(X)\quad -CO-R_6-CO-$$

dans lesquelles :

. les radicaux $R_4$, identiques, représentent chacun un radical phénylène-1,4 monosubstitué par

un groupe méthyle, éthyle, ou un atome de chlore ou de brome ;

. les radicaux $R_5$ représentent chacun un radical phénylène-1,4 non substitué ;

. avec $0,3 \leq a' \leq 1$ ; $0 \leq b' \leq 0,7$ ; et $a' + b' = 1$ ;

. les radicaux $R_6$, qui peuvent être identiques ou différents, représentent chacun un radical choisi parmi les groupes phénylène-1,4, cyclohexylène-1,4, biphénylène-4,4', naphtalène-2,6, éthylènedioxy-4,4' diphénylène-1,1', buthylènedioxy-4,4', diphénylène-1,1', hexylènedioxy-4,4' diphénylène-1,1' ; la quantité des unités (IX) dans le mélange (IX) et (X) étant comprise entre 30 et 90 en mole ; et le rapport molaire des unités (VIII) par rapport à la somme des unités (IX) + (X) étant compris entre 0,95 et 1,05.

**8.** Disque optique non inscriptible, inscriptible ou réinscriptible caractérisé en ce qu'il est formé :

- a) d'un substrat (4) selon l'une quelconque des revendications précédentes 1 à 7, ledit substrat étant gravé au moins sur une de ses deux faces, la face gravée étant recouverte d'une couche réfléchissante (3) ;
- b) une couche d'entrée (1) transparente, disposée du côté de chaque face gravée du substrat (4) et n'étant pas en contact avec ce dernier, le substrat (4) et la couche d'entrée (1) étant reliés par un moyen de raccordement (5) tel que la couche d'enregistrement réfléchissante soit isolée de manière étanche de l'environnement extérieur.

## Claims

**1.** Rigid, circular substrate made of thermotropic polymeric material, etched on all or part of at least one of its faces, for an optical recording or reading disc, characterised in that it has a coefficient of heat expansion in the radial direction which is between 10 and 30 $\mu$m/m/°C, a tensile modulus of elasticity in the radial direction ranging from 9,000 MPa to 18,000 MPa, and in that it is obtained by performing a moulding operation on the thermotropic polymer by injection into a suitable mould fitted with a central injection system for the molten polymer.

**2.** Substrate according to Claim 1, characterised in that it has the following principal dimensions: external diameter of between 60 mm and 360 mm and thickness of between 0.5 mm and 4 mm and in that, on all or part of at least one of its faces, it comprises an etching made at the time of the injection-moulding operation consisting of a groove in the form of a spiral or of concentric tracks with a pitch of between 1 and 2 $\mu$m, a depth of between $400 \times 10^{-10}$ and $15,000 \times 10^{-10}$ metres and a width of between 0.4 and 1 $\mu$m.

**3.** Substrate according to Claim 1 or 2, characterised in that it has a relative density of less than 1.8 and a deformation temperature under load of at least 150°C.

**4.** Substrate according to any one of the preceding claims, characterised in that the thermotropic polymers employed have a flow temperature which lies in the range from 200°C to 350°C.

**5.** Substrate according to any one of the preceding claims, characterised in that the thermotropic polymers employed have an inherent viscosity of between 1 and 4 dl/g.

**6.** Substrate according to any one of Claims 1 to 5, characterised in that it is injection-moulded under the following conditions: temperature of the walls of the mould: 100°C to 200°C; temperature of the molten polymer: 280°C to 350°C; injection time: 2 to 10 seconds; holding pressure: 40 MPa to 120 MPa.

**7.** Substrate according to any one of the preceding claims, characterised in that the thermotropic polymer is chosen from:

- a) thermotropic polyesters containing essentially the repeat units of formula I, III, IV and optionally II,

  (I) denoting the structure:

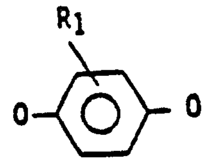

in which $R_1$ denotes a methyl or ethyl radical or a chlorine or bromine atom, it being possible for the units (I) to be identical or different from each other,
(II) denoting the structure:

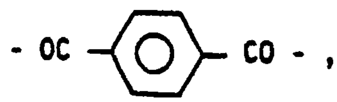

(III) denoting the structure:

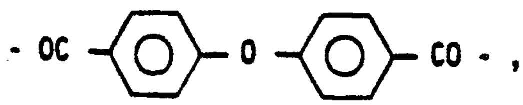

(IV) denoting the structure:

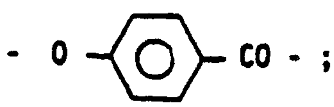

- the molar ratio of the units (I) relative to the sum of the units (II) + (III) lies in the range from 0.95 to 1.05;
- the quantity of the units (II) in the mixture of (II) + (III) lies in the range from 0 to 70 mol%, and that of the units (III), relative to the same reference, lies in the range from 100 to 30 mol%;
- the quantity of the units (IV), expressed relative to the quantity of the units (I), lies in the range from 10 to 300 mol%;
- b) thermotropic alkylaromatic polyesters containing essentially units of formula:

$$\text{(V)} \quad (-O-X_1-O-)_a \ (-O-X_2-O-)_b \ (-O-X_3-O-)_c$$
$$\text{(VI)} \quad -CO-Y-CO-$$
$$\text{(VII)} \quad -CO-Z-CO-$$

in which:
$X_1$ denotes a 1,4-phenylene radical monosubstituted by a methyl or ethyl group or a chlorine or bromine atom,
$X_2$ an unsubstituted 1,4-phenylene radical,
$X_3$ denotes a 1,4-phenylene radical disubstituted by two methyl or ethyl groups or 2 chlorine or bromine atoms, or a 4,4'-diphenylene radical or p,p'-diphenylene ether in which each aromatic ring may be substituted by a methyl or ethyl group or a chlorine or bromine atom,
with $0.4 \leqq a \leqq 1$
$0 \leqq b \leqq 0.6$
$0 \leqq c \leqq 0.1$
and $a + b + c = 1$,
Y denotes:
- a 1,4-phenylene or 1,4-cyclohexylene radical
- or a radical containing two phenylene groups capable of being linked together by a single

bond or an acyclic chain capable of containing up to 8 carbon atoms and, if desired, 1 or 2 heteroatoms

- or a divalent aromatic radical containing at least two condensed phenyl nuclei in which the bonds linked to the carbonyl groups are opposite and parallel, and

Z denotes a $(CH_2)_n$ radical with $3 \leqq n \leqq 10$

the molar ratio Z/Y + Z being between 20 and 50%;

- c) the thermotropic carbonate polyesters containing essentially units of formula:

$$\text{(VIII)}\quad (-O-R_4-O-)_{a'}\quad,\quad (-O-R_5-O-)_{b'}$$

$$\text{(IX)}\quad -\overset{\overset{\displaystyle O}{\|}}{C}-$$

$$\text{(X)}\quad -CO-R_6-CO-$$

in which:

each of the radicals $R_4$, which are identical, denotes a 1,4-phenylene radical monosubstituted by a methyl or ethyl group or a chlorine or bromine atom;

each of the radicals $R_5$ denotes an unsubstituted 1,4-phenylene radical;

with $0.3 \leqq a' \leqq 1$; $0 \leqq b' \leqq 0.7$; and $a' + b' = 1$ ;

each of the radicals $R_6$, which may be identical or different, denotes a radical chosen from I,4-phenylene, 1,4-cyclohexylene, 4,4'-biphenylene, 2,6-naphthalene, 4,4'-ethylenedioxy-1,1'-diphenylene, 4,4'-butylenedioxy, 1,1'-diphenylene and 4,4'-hexylenedioxy-1,1'-diphenylene groups; the quantity of the units (IX) in the mixture of (IX) and (X) being between 30 and 90 mol%; and the molar ratio of the units (VIII) relative to the sum of the units (IX) + (X) being between 0.95 and 1.05.

8. Nonerasable, erasable or repeatedly erasable optical disc characterised in that it is made up:
   - a) of a substrate (4) according to any one of the preceding Claims 1 to 7, the said substrate being etched at least on one of its two faces, the etched face being covered with a reflecting layer (3);
   - b) a transparent input layer (1) arranged on the side of each etched face of the substrate (4) and not being in contact with the latter, the substrate (4) and the input layer (1) being connected by a coupling means (5) such that the reflecting recording layer is isolated in a leakproof manner from the external environment.

## Ansprüche

1. Steifes, rundes Substrat aus thermotropem Polymeren und auf der ganzen oder einem Teil mindestens einer seiner Seiten graviert für Aufzeichnungsplatten oder zum optischen Lesen, **dadurch gekennzeichnet**, daß es einen thermischen Expansionskoeffizienten in radialem Sinne zwischen 10 und 30 $\mu m/m/^{\circ}C$,

   einen Elastizitätsmodul beim Ziehen in radialem Sinn von 9000 MPA bis 18000 MPA aufweist, und daß es erhalten wurde, indem das thermotrope Polymere durch Spritzguß in einer geeigneten Form, die mit einem zentralen Einspritzsystem für das geschmolzene Polymere ausgestattet ist, geformt wurde.

2. Substrat gemäß Anspruch 1, dadurch gekennzeichnet, daß es die folgenden hauptsächlichen Dimensionen besitzt: Außendurchmesser zwischen 60 mm und 360 mm und Dicke zwischen 0,5 mm und 4 mm, und daß es ganz oder teilweise auf mindestens einer seiner Seiten eine Gravur aufweist, die im Augenblick der Spritzgußoperation gemacht wurde, und aus einer Rillung in Form einer Spirale oder konzentrischer Spuren besteht, mit einem Schritt zwischen 1 und 2 um, einer Tiefe zwischen 400 x $10^{-10}$ und 15000 x $10^{-10}$ m und einer Breite zwischen 0,4 und 1 $\mu m$.

3. Substrat gemäß Anspruch 1 oder 2, dadurch gekennzeichnet, daß es eine Dichte unterhalb 1,8 und

eine Biegetemperatur unter Belastung von mindestens gleich 150 °C besitzt.

4. Substrat gemäß einem der vorhergehenden Ansprüche, dadurch gekennzeichnet, daß die verwendeten thermotropen Polymeren eine Fließtemperatur in dem Bereich von 200 °C bis 350 °C besitzen.

5. Substrat gemäß einem der vorhergehenden Ansprüche, dadurch gekennzeichnet, daß die verwendeten thermotropen Polymeren eine innere Viskosität (Eigenviskosität) zwischen 1 und 4 dl/g haben.

6. Substrat gemäß einem der Ansprüche 1 bis 5, dadurch gekennzeichnet, daß es durch Spritzguß unter folgenden Bedingungen geformt wird: Temperatur der Wände der Form: 100 °C bis 200 °C; Temperatur des geschmolzenen Polymeren: 280 °C bis 350 °C; Einspritzdauer: 2 bis 10 Sekunden; Aufrechterhaltungsdruck: 40 MPa bis 120 MPa.

7. Substrat gemäß einem der vorhergehenden Ansprüche, dadurch gekennzeichnet, daß das thermotrope Polymere ausgewählt ist unter:
a) den thermotropen Polyestern, die im wesentlichen die wiederkehrenden Einheiten der Formel (I), (III), (IV) und gegebenenfalls (II) enthalten:
(I) bezeichnet die Struktur:

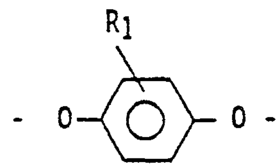

worin $R_1$ einen Methyl- oder Ethylrest oder ein Chloroder Bromatom bedeutet, und die Einheiten (I) identisch oder untereinander verschieden sein können;
(II) bezeichnet die Struktur:

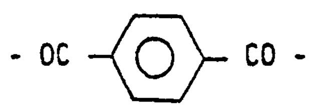

(III) bezeichnet die Struktur:

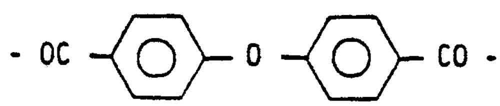

(IV) bezeichnet die Struktur:

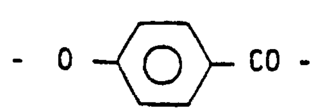

das Molverhältnis der Einheiten (I) in bezug auf die Summe der Einheiten (II) + (III) liegt in dem Bereich von 0,95 bis 1,05;
die Menge der Einheiten (II) in dem Gemisch (II) + (III) liegt in dem Bereich von 0 bis 70 Mol-%, und diejenige der Einheiten (III) in bezug auf die gleiche Referenz liegt in dem Bereich von 100 bis 30 Mol-%;

die Menge der Einheiten (IV), ausgedrückt in bezug auf die Menge der Einheiten (I), liegt in dem Bereich von 10 bis 300 Mol-%,

b) den thermotropen alkylaromatischen Polyestern, die im wesentlichen Einheiten der Formel

$$(V)\quad (-O-X_1-O-)_a\ (-O-X_2-O-)_b\ (-O-X_3-O-)_c$$

$$(VI)\quad -CO-Y-CO-$$

$$(VII)\quad -CO-Z-CO-$$

enthalten, worin:

. $X_1$ einen 1 , 4-Phenylenrest, monosubstituiert durch eine Methyl-, Ethylgruppe oder ein Chlor- oder Bromatom bedeutet,

. $X_2$ einen nicht-substituierten 1 ,4-Phenylenrest bedeutet,

. $X_3$ einen 1 , 4-Phenylenrest bedeutet, disubstituiert durch zwei Methyl-, Ethylgruppen oder zwei Chlor- oder Bromatome oder einen 4,4'-Diphenylenrest oder p-p'-Diphenylenether, worin jeder aromatische Ring durch eine Methyl-, Ethylgruppe oder ein Chlor- oder Bromatom substituiert sein kann mit

$0{,}4 \leqq a \leqq 1$

$0 \leqq b \leqq 0{,}6$

$0 \leqq c \leqq 0{,}1$, und

$a + b + c = 1$

. Y bedeutet:

- einen 1 ,4-Phenylen-, 1 ,4-Cyclohexylenrest;
- oder einen Rest mit zwei Phenylengruppen, die untereinander durch eine Einfachbindung oder eine acyclische Kette mit bis zu 8 Kohlenstoffatomen verbunden sein können und gegebenenfalls 1 oder 2 Heteroatome tragen,
- oder einen zweiwertigen aromatischen Rest mit mindestens zwei kondensierten Phenylringen, worin die Bindungen, die mit den Carbonylgruppen verknüpft sind, gegenüber und parallel sind, und

. Z bedeutet einen Rest $(CH_2)_n$ mit $3 \leqq n \leqq 10$

. wobei das Molverhältnis Z/Y + Z zwischen 20 und 50 % liegt;

c) den thermotropen Carbonatpolyestern, die im wesentlichen Gruppen der Formeln enthalten:

$$(VIII)\quad (-O-R_4-O-)_{a'}\quad ,\quad (-O-R_5-O-)_{b'}$$

$$(IX)\quad -\overset{O}{\overset{\|}{C}}-$$

$$(X)\quad -CO-R_6-CO-$$

worin

. die Reste $R_4$ identisch sind und jeweils einen 1 ,4-Phenylenrest, monosubstituiert durch eine Methyl-, Ethylgruppe, oder ein Chlor- oder Bromatom bedeuten,

. die Reste $R_5$ jeweils einen nicht-substituierten 1,4-Phenylenrest bedeuten,

. mit $0{,}3 \leqq a' \leqq 1$; $0 < b' \leqq 0{,}7$ und $a' + b' = 1$ ;

. die Reste $R_6$, die identisch oder verschieden sein können, bedeuten jeweils einen Rest ausgewählt unter den Gruppen 1,4-Phenylen, 1,4-Cyclohexylen, 4,4'- Biphenylen, 2,6-Naphthalen, 4,4'-Ethylendioxy-1,1'-diphenylen, 4,4'-Butylendioxy-1,1'-diphenylen, 4,4'-Hexylendioxy-1,1'-diphenylen; wobei die Menge der Einheiten (IX) in dem Gemisch (IX) und (X) zwischen 30 und 90 Mol-% beträgt; und das Molverhältnis der Einheiten (VIII) in bezug auf die Summe der Einheiten (IX) + (X) zwischen 0,95 und 1,05 liegt.

8. Nicht-beschreibbare, beschreibbare oder wieder-beschreibbare optische Platte, dadurch gekennzeichnet, daß sie gebildet ist:

a) aus einem Substrat (4) gemäß einem der vorstehenden Ansprüche 1 bis 7, wobei dieses Substrat auf mindestens einer seiner beiden Seiten graviert ist und die gravierte Seite mit einer reflektierenden Schicht (3) bedeckt ist;

b) einer transparenten Eingangsschicht (1 ), die von der Seite jeder gravierten Fläche des Substrats (4) angeordnet ist und nicht in Kontakt mit der letzteren steht, wobei das Substrat (4) und die Eingangsschicht (1) durch ein Verbindungsmittel (5) verbunden sind, so daß die reflektierende Aufzeichnungsschicht in dichter Weise von der Außenumgebung isoliert ist.

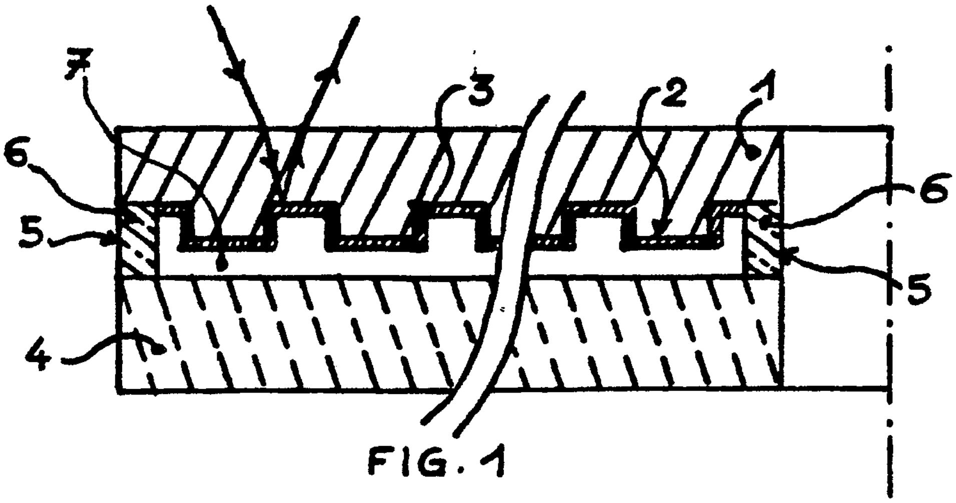


FIG. 1

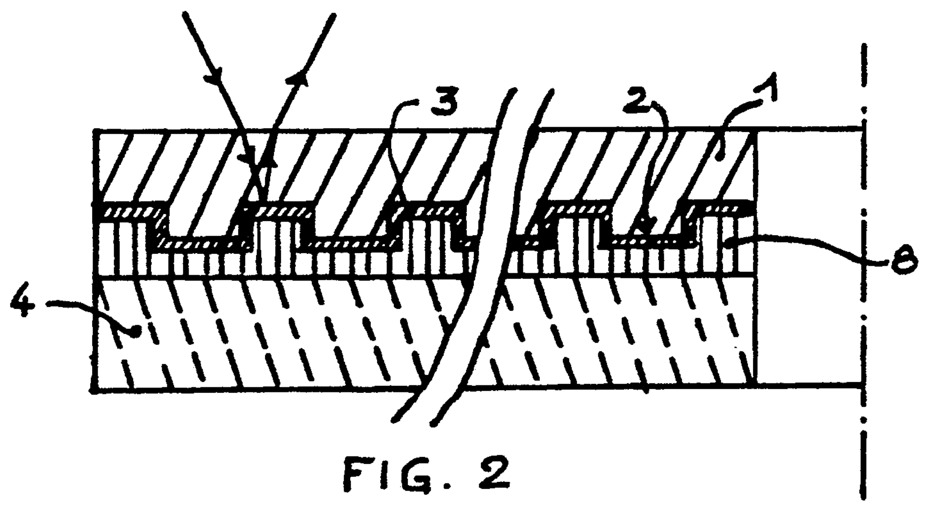


FIG. 2

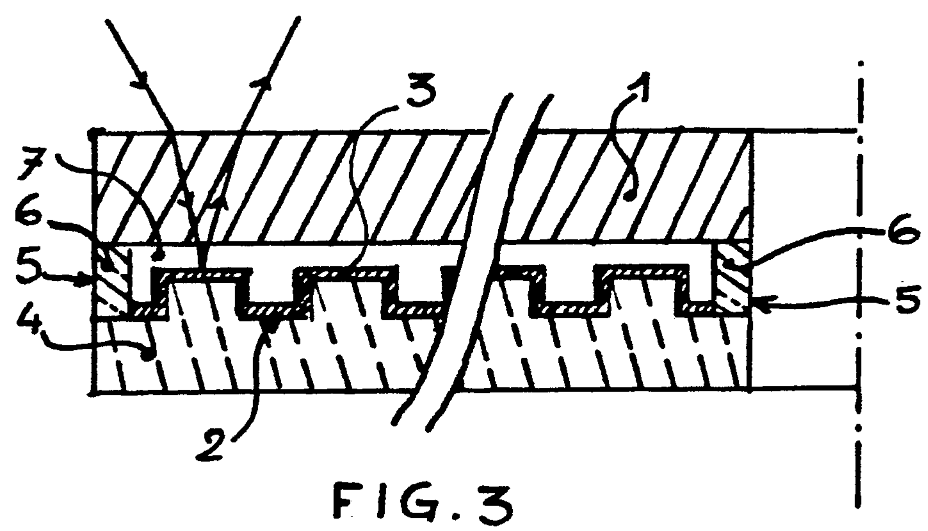


FIG. 3

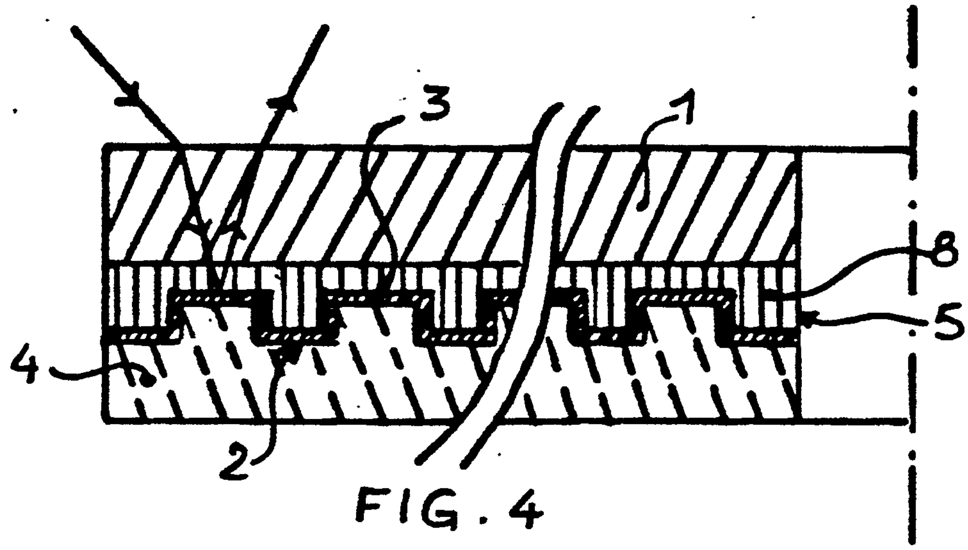


FIG. 4

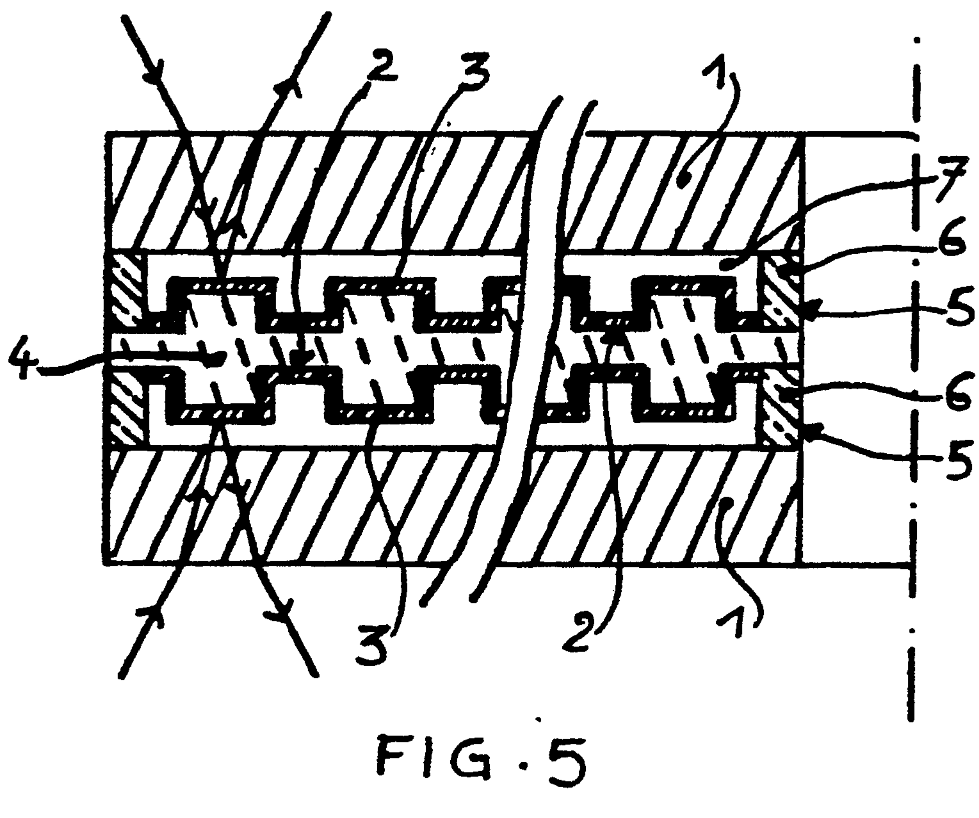


FIG. 5